# EUROPEAN PATENT APPLICATION

(11) **EP 3 952 095 A1**
(43) Date of publication of application: **09.02.2022**
(21) Application number: 20780013.7
(22) Date of filing: 22.01.2020
(51) Int. Cl.: H02M 7/06, H02M 7/08, H02M 7/12

(54) **POWER SOURCE DEVICE, VEHICLE AND SWITCHING CONTROL DEVICE**

(30) Priority: 26.03.2019 JP 2019059137; 26.03.2019 JP 2019059143
(71) Applicant: Panasonic Intellectual Property Management Co., Ltd., Osaka-shi, Osaka 540-6207 (JP)
(72) Inventor: CHIZUWA, Shuhei, Osaka-shi, Osaka 540-6207 (JP)
(74) Representative: Eisenführ Speiser
(86) International application number: PCT/JP2020/002044
(87) International publication number: WO 2020/195060

(57) **Abstract**

A power supply apparatus includes a first terminal, a second terminal, a third terminal, a fourth terminal, a first load section provided on a first power line and a fourth power line, a second load section provided on a second power line and a fifth power line, a third load section on a third power line and a sixth power line, a plurality of capacitors respectively provided between each of the first, the second, the third, the fourth, the fifth and the sixth power line, and a ground and a switch section switching at least one power line of the fourth power line, the fifth power line and the sixth power line to between conducting and not-conducting. The switch section switches the at least one power line to not-conducting when the single-phase power supply is connected to the first terminal and the fourth terminal.

## Description

### Technical Field

The present disclosure relates to a power supply apparatus, a vehicle and a switching control device.

### Background Art

A power supply apparatus (for example, a charger mounted on an electrical vehicle) is required to have a configuration that allows the power supply apparatus to operate in various infrastructures around the world from the viewpoint of global expansion of products equipped the power supply apparatus. That is, since single-phase power supplies may be used in some of the infrastructures, and three-phase power supplies may be used in others, the power supply apparatus is required to have a configuration that allows the power supply apparatus to operate as both a single-phase power supply and a three-phase power supply (see, for example, PTL 1).

In such a power supply apparatus, a load section is provided corresponding to each power supply of the three-phase power supply. Each of these load sections is connected to a non-ground power line positioned at the non-ground side, and a ground power line positioned at the ground side. A capacitor is provided between the non-ground power line and the ground line, and between the ground power line and the ground line, of each of the load sections. In addition, three non-ground terminals connected to the non-ground power line are provided corresponding to each power supply of three-phase power supply. On the other hand, a single ground terminal connected to the ground power line is provided corresponding to all power supplies of the three-phase power supply. That is, each ground power line is connected in parallel to the single ground terminal.

### Citation List

### Patent Literature

PTL 1
Japanese Patent Application Laid-Open No. 2017-169350

### Summary of Invention

### Technical Problem

By the way, in above power supply apparatus, when a single-phase power supply as an external power supply is used, there are some cases where the non-ground terminal of the single-phase power supply may be connected to the ground terminal and the ground terminal of the single-phase power supply is connected to the non-ground terminal in a reverse connection state. When the single-phase power supply is connected to the power supply apparatus in a normal connection state rather than the reverse connection state, power is supplied to only the non-ground power line corresponding to the single non-ground terminal. On the other hand, when the single-phase power supply is connected to the power supply apparatus in the reverse connection state, power is supplied to the three ground power lines.

As a result, a total capacity between the power lines and the ground line to which the single-phase power supply supplies the power varies between the normal connection state and the reverse connection state. Specifically, when the single-phase power supply is connected to the power supply apparatus in the normal connection state, the total capacity amounts to a capacity of only one capacitor corresponding to the single e non-ground power line. On the other hand, when the single-phase power supply is connected to the power supply apparatus in the reverse connection state, the total capacity amounts to a sum of respective capacities of three capacitors corresponding to the three ground power lines. That is, the capacitor for the case of the single-phase power supply being connected in the reverse connection state has substantially three times capacity as large as the capacitor for the case of the single-phase power supply being connected in the normal connection state.

From the above, when the single-phase power supply is connected in the reverse connection state, a leakage current (for example, contact current) occurring via the capacitor may increase compared with the case of the single-phase power supply being connected in the normal connection state. In the configuration disclosed in PTL 1, since it is not assumed that the single-phase power supply is connected in the reverse connection state, there is a room of improvement from the viewpoint of reducing the leakage current.

An object of the present disclosure is to provide a power supply apparatus, a vehicle and a switching control device that can reduce the leakage current due to the connection states of the single-phase power supply.

### Solution to Problem

A power supply apparatus according to the present disclosure allowed to be connected to a single-phase power supply and a three-phase power supply, the power supply apparatus comprising:
a first terminal that is connected to a first power line and is allowed to be connected to any of a non-ground end of the single-phase power supply, a ground end of the single-phase power supply, and a first non-ground end of the three-phase power supply;
a second terminal that is connected to a second power line and is allowed to be connected to a second non-ground end of the three-phase power supply;
a third terminal that is connected to a third power line and is allowed to be connected to a third non-ground end of the three-phase power supply;
a fourth terminal that is connected to a fourth power line, a fifth power line and a sixth power line and is allowed to be connected to any of the non-ground end of the single-phase power supply, the ground end of the single-phase power supply and a ground end of the three-phase power supply;
a first load section provided on the first power line and the fourth power line;
a second load section provided on the second power line and the fifth power line;
a third load section provided on the third power line and the sixth power line;
a plurality of capacitors provided between each of the first power line, the second power line, the third power line, the fourth power line, the fifth power line and the sixth power line, and a ground; and
a switch section switching at least one power line of the fourth power line, the fifth power line and the sixth power line between conducting and not-conducting, wherein
the switch section switches the at least one power line to not-conducting when the single-phase power supply is connected to the first terminal and the fourth terminal.

A vehicle according to the present disclosure, comprising:
a battery; and
the power supply apparatus.

A switching control device according to the present disclosure, the switching control device of a power supply apparatus allowing to be connected to a single-phase power supply and a three-phase power supply, wherein the switching control device includes a switch section switching at least one ground power line of each ground power line in each of three load sections between conducting and not-conducting, the switching control device comprising:
an acquiring section that acquires power supply information representing information of a power supply connected to the power supply apparatus; and
a switching section that switches the switch section to set the at least one ground power line to not-conducting when the power supply connected to the power supply apparatus is the single-phase power supply.

### Advantageous Effects of Invention

According to the present disclosure, the leakage current due to the connection states of the single-phase power supply can be reduced.

### Brief Description of Drawings

FIG. 1 is a block diagram illustrating a vehicle including a power supply apparatus according to a first embodiment of the present disclosure;
FIG. 2 is a diagram illustrating a state of the power supply apparatus where a single-phase power supply is connected in a normal connection state in FIG. 1;
FIG. 3 is a diagram illustrating a state of the power supply apparatus where a single-phase power supply is connected in a reverse connection state in FIG. 1;
FIG. 4 is a flowchart of an exemplary operation of a switching control in the power supply apparatus;
FIG. 5 is a block diagram illustrating a vehicle including a power supply apparatus according to a variation of the first embodiment of the present disclosure;
FIG. 6 is a block diagram illustrating a vehicle including a power supply apparatus according to a second embodiment of the present disclosure;
FIG. 7 is a diagram illustrating a state of a power supply apparatus where the single-phase power supply is connected in a normal connection state in FIG. 6;
FIG. 8 is a diagram illustrating a state of a power supply apparatus where the single-phase power supply is connected in a reverse connection state in FIG. 6;
FIG. 9 is a flowchart of an exemplary operation of a switching control in the power supply apparatus; and
FIG. 10 is a block diagram illustrating a vehicle including a power supply apparatus according to a variation of the second embodiment of the present disclosure.

### Description of Embodiments

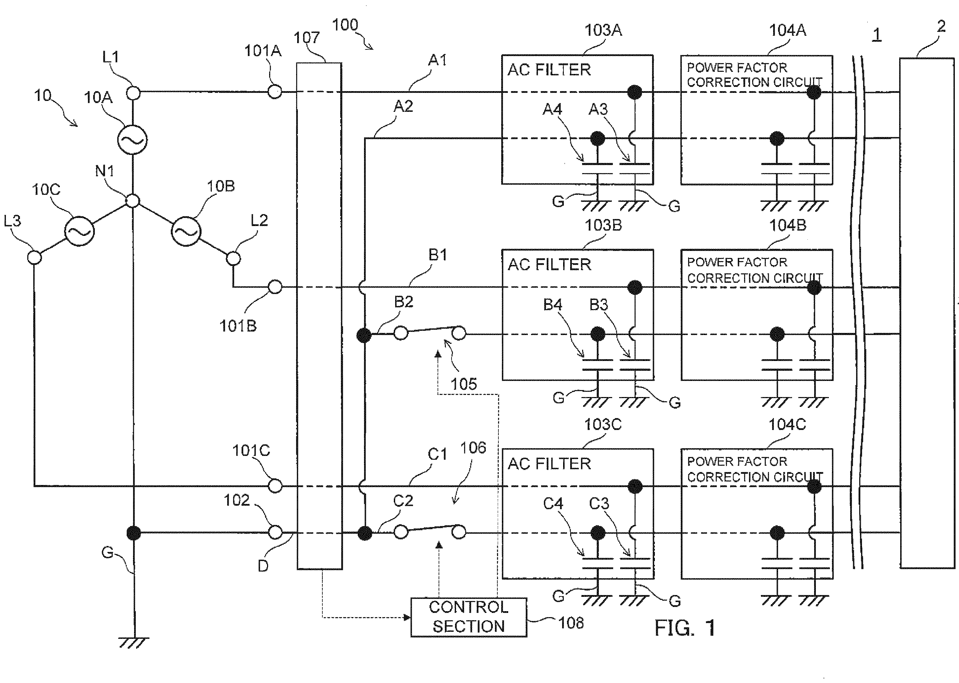

A first embodiment of the present disclosure is described below with reference to the drawings. FIG. 1 a block diagram illustrating a vehicle 1 including a power supply apparatus 100 according to the first embodiment of the present disclosure.

As illustrated in FIG. 1, the power supply apparatus 100 is, for example, a charger for charging a battery mounted in a vehicle, and operates by power supplied from an external AC power supply. The power supply apparatus 100 is configured so that a single-phase power supply and a third-phase power supply 10 can be connected as an external power supply.

FIG. 1 illustrates an example where the power supply apparatus 100 is connected to the third-phase power supply 10 having a first AC power supply 10A, a second power supply 10B and a third power supply 10C connected by Y connection at a neutral point N1 connected to a ground line G. Respective ground ends of the first AC power supply 10A, the second power supply 10B and the third power supply 10C are connected at the neutral point N1. The ground line G corresponds to the ground.

The power supply apparatus 100 includes a first terminal 101A, a second terminal 101B, a third terminal 101C, a fourth terminal 102, AC filters 103A, 103B, 103C, power factor correction circuits 104A, 104B, 104C, a first switch 105, a second switch 106, a power supply detection section 107, a control section 108 and the like.

The first terminal 101A is connected to a first non-ground end L1 of the first AC power supply 10A in the three-phase power supply 10. In addition, the first terminal 101A is connected to a first power line A1 in the power supply apparatus 100.

The second terminal 101B is connected to a second non-ground end L2 of the second AC power supply 10B in the three-phase power supply 10. In addition, the second terminal 101B is connected to a second power line B1 in the power supply apparatus 100.

The third terminal 101C is connected to a third non-ground end L3 of the third AC power supply 10C in the three-phase power supply 10. In addition, the third terminal 101C is connected to a third power line C1 in the power supply apparatus 100.

The fourth terminal 102 is connected to the neutral point N1 in the three-phase power supply 10 corresponding to a ground end of the three-phase power supply 10, i.e., the ground line G. In addition, the fourth terminal 102 is connected to a fourth power line A2, a fifth power line B2 and a sixth power line C2 via a power line D. The power supply detection section 107 is provided on the power line D, the first power line A1, the second power line B1 and the third power line C1.

The AC filters 103A, 103B, 103C and the power factor correction circuits 104A, 104B, 104C are circuits for converting power supplied from the single-phase power supply or the three-phase power supply 10 into power charged for the charging battery 2. Note that the power supply apparatus 100 may include a rectifying circuit, a DC-DC conversion circuit and the like.

The AC filter 103A and the power factor correction circuit 104A are provided on the first power line A1 and the fourth power line A2. The AC filter 103A corresponds to a "first load section" of the present disclosure.

That is, the AC filter 103A and the power factor correction circuit 104A are circuits corresponding to the first AC power supply 10A. When the three-phase power supply 10 is connected to the power supply apparatus 100, the first power line A1 becomes a power line for power supply, and the fourth power line A2 becomes a power line for the ground. The fourth power line A2 corresponds to a "ground power line" of the present disclosure.

In addition, the AC filter 103A includes a first capacitor A3 and a second capacitor A4 which are disposed on a part corresponding to an output stage. The first capacitor A3 is connected between the first power line A1 and the ground line G. The second capacitor A4 is connected between the fourth power line A2 and the ground line G.

The AC filter 103B and the power factor correction circuit 104B are provided on the second power line B1 and the fifth power line B2. The AC filter 103B corresponds to a "second load section" of the present disclosure.

That is, the AC filter 103B and the power factor correction circuit 104B are circuits corresponding to the second AC power supply 10B. When the three-phase power supply 10 is connected to the power supply apparatus 100, the second power line B1 becomes a power line for power supply, and the fifth power line B2 becomes a power line for the ground. The fifth power line B2 corresponds to a "ground power line" of the present disclosure.

In addition, the AC filter 103B includes a third capacitor B3 and a fourth capacitor B4 which are disposed on a part corresponding to an output stage. The third capacitor B3 is connected between the second power line B1 and the ground line G. The fourth capacitor B4 is connected between the fifth power line B2 and the ground line G.

The AC filter 103C and the power factor correction circuit 104C are provided on the third power line C1 and the sixth power line C2. The AC filter 103B corresponds to a "third load section" of the present disclosure.

That is, the AC filter 103C and the power factor correction circuit 104C are circuits corresponding to the third AC power supply 10C. When the three-phase power supply 10 is connected to the power supply apparatus 100, the third power line C1 becomes a power line for power supply, and the sixth power line C2 becomes a power line for the ground. The sixth power line C2 corresponds to a "ground power line" of the present disclosure.

In addition, the AC filter 103C includes a fifth capacitor C3 and a sixth capacitor C4 which are disposed on a part corresponding to an output stage. The fifth capacitor C3 is connected between the third power line C1 and the ground line G. The sixth capacitor C4 is connected between the sixth power line C2 and the ground line G.

The first capacitor A3, the second capacitor A4, the third capacitor B3, the fourth capacitor B4, the fifth capacitor C3 and the sixth capacitor C4 correspond to "a plurality of capacitors" of the present disclosure. Note that the first capacitor A3, the second capacitor A4, the third capacitor B3, the fourth capacitor B4, the fifth capacitor C3 and the sixth capacitor C4 all have the same capacitance. In addition, a plurality of capacitors (symbols of which are omitted) are provided in the respective output stages of the power factor correction circuits between each of the six power lines and the ground line.

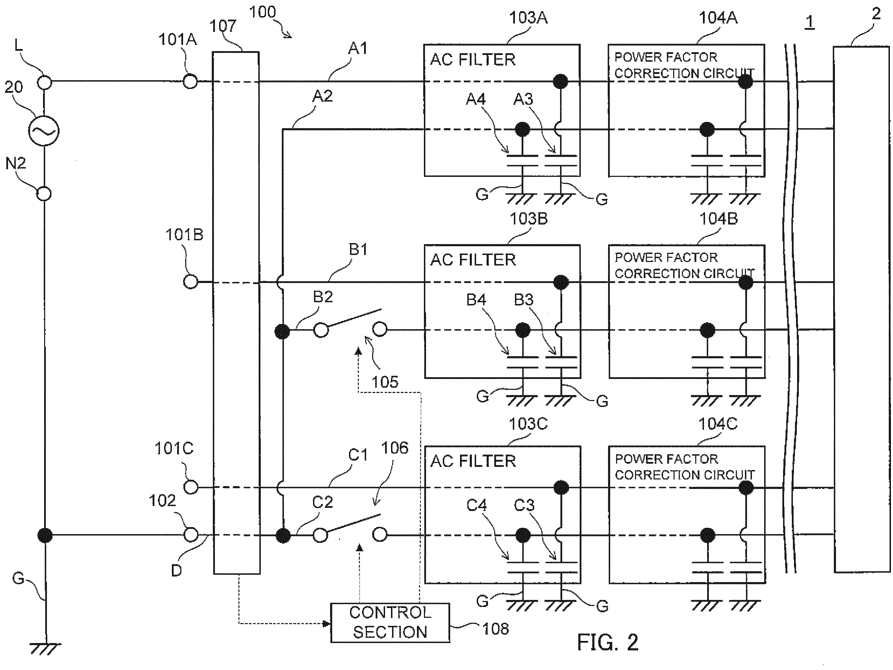

In addition, as illustrated in FIG. 2, when the power supply apparatus 100 is connected to a single-phase power supply 20, a non-ground end L and a ground end N2 of the single-phase power supply 20 are connected to any of the first terminal 101A and the fourth terminal 102. The ground end N2 is also connected to the ground line G.

In the case of the normal connection state in which the non-ground end L of the single-phase power supply 20 is connected to the first terminal 101A and the ground end N2 of the single-phase power supply 20 is connected to the fourth terminal 102, the power of the single-phase power supply 20 is supplied to the power supply apparatus 100 via the first power line A1. That is, when the single-phase power supply 20 is connected in the normal connection state, the first power line A1 becomes a power line for power supply, and the fourth power line A2 becomes a power line for the ground.

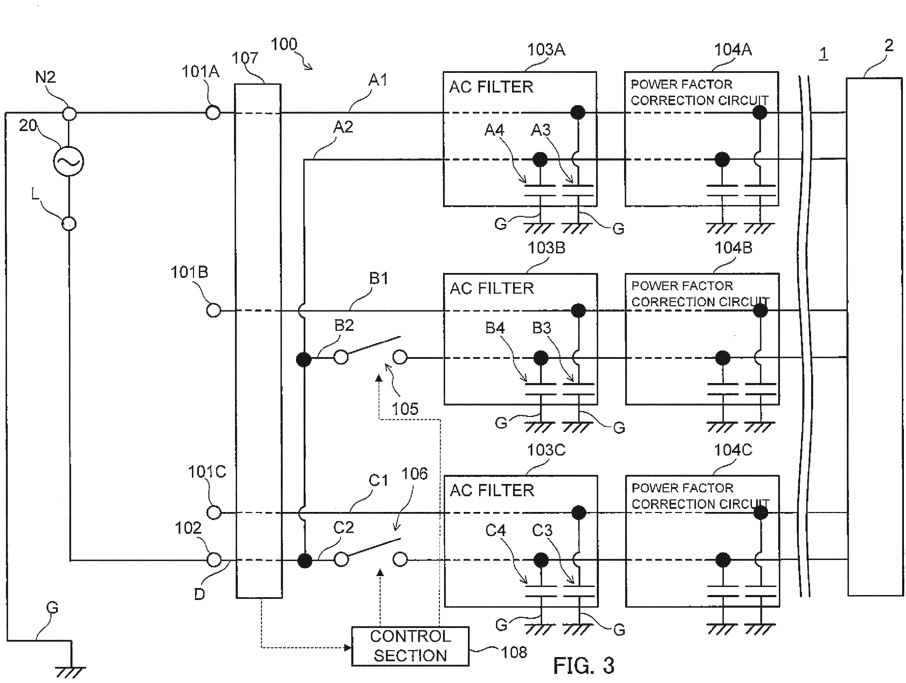

In addition, as illustrated in FIG. 3, in the case of the reverse connection state in which the ground end N2 of the single-phase power supply 20 is connected to the first terminal 101A and the non-ground end L of the single-phase power supply 20 is connected to the fourth terminal 102, the power of the single-phase power supply 20 is supplied to the power supply apparatus 100 via the fourth power line A2. That is, when the single-phase power supply 20 is connected in the reverse connection state, the fourth power line A2 becomes a power line for power supply, and the first power line A1 becomes a power line for the ground.

Note that even in the case of the single-phase power supply 20 being in the reverse connection state, the power supply apparatus 100 according to the present embodiment can operate similar to the normal connection state.

The first switch 105 and the second switch 106 may be relay elements, for example. The first switch 105 and the second switch 106 correspond to a "switch section" of the present disclosure.

Note that the first switch 105 and the second switch 106 are not limited to the relay elements, and they may be any element as long as they are elements such as a semiconductor switching element (for example, IGBT (Insulated Gate Bipolar Transistor) or FET (Field Effect Transistor)) that can switch power lines between conducting and not-conducting.

The first switch 105 is provided on the fifth power line B2 and switches the fifth power line B2 between conducting and not-conducting. The first switch 105 is provided in a stage preceding the AC filter 103B of the fifth power line B2, that is, a stage preceding the fourth capacitor B4.

The second switch 106 is provided on the sixth power line C2 and switches the sixth power line C2 between conducting and not-conducting. The second switch 106 is provided in a stage preceding the AC filter 103C of the sixth power line C2, that is, a stage preceding the sixth capacitor C4.

The power supply detection section 107 detects types of power supplies connected to the first terminal 101A, the second terminal 101B, the third terminal 101C and the fourth terminal 102. The power supply detection section 107 is, for example, a known voltage detection circuit that detects voltage values of the first terminal 101 A, the second terminal 101B, the third terminal 101C and the fourth terminal 102. The power supply detection section 107 is provided on the first power line A1, the second power line B 1, the third power line C1 and the power line D.

Note that the power supply detection section 107 may be a current detection circuit that detects current values of the first terminal 101 A, the second terminal 101B, the third terminal 101C and the fourth terminal 102.

The control section 108 includes a central processing unit (CPU), a read only memory (ROM), a random access memory (RAM) and an input output circuit, which are not illustrated in the drawing. The control section 108 is configured to control states of the first switch 105 and the second switch 106 by using detection result of the power detection section 107 on the basis of a program set in advance. The control section 108 corresponds to a "switching control device", an "acquiring section" and a "switching section" of the present disclosure.

The control section 108 controls to switch the first switch 105 and the second switch 106 to not-conducting when the single-phase power supply 20 is connected to the first terminal 101A and the fourth terminal 102.

Specifically, the control section 108 sets the first switch 105 and the second switch 106 to not-conducting at an initial state. When a power supply is connected to the power supply apparatus 100, the control section 108 acquires a voltage value detected by the power supply detection section 107 and determines the types of the power supplies connected to the first terminal 101A, the second terminal 101B, the third terminal 101C and the fourth terminal 102.

When the power supply connected to the power supply apparatus 100 is the single-phase power supply 20, as illustrated in FIG. 2 and FIG. 3, the first terminal 101A and the fourth terminal 102 are connected to the non-ground end L or the ground end N2 in the single-phase power supply 20. In this case, the power supply detection section 107 detects a voltage value corresponding to power supplied to the first power line A1 or the power line D. On the basis of the voltage value, the control section 108 determines that the types of power supplies connected to the first terminal 101A, the second terminal 101B, the third terminal 101C and the fourth terminal 102 is the single-phase power supply 20.

The control section 108 sets the first switch 105 and the second switch 106 to not-conducting when the types of power supplies is determined that it is the single-phase power supply 20. Since the first switch 105 and the second switch 106 is set to not-conducting at the initial state, in this case, states of the first switch 105 and the second switch 106 are maintained in not-conducting.

When the first terminal 101A and the fourth terminal 102 are connected to the single-phase power supply 20 in the reverse connection state, power is supplied to the power supply apparatus 100 via the fourth terminal 102. Therefore, when states of the first switch 105 and the second switch 106 are conducting, power is supplied to not only the fourth power line A2 but also the fifth power line B2 and the sixth power line C2.

In this case, since capacitors are connected respectively between each of the fourth power line A2, the fifth power line B2 and the sixth power line C2 and the ground line G, a total capacity of capacitors corresponding to each power line to which power is supplied, is increasing in comparison with the normal connection state.

Specifically, since power is not supplied to the second power line B1 and the third power line C1 when the single-phase power supply 20 is connected in the normal connection state (see FIG. 2), a capacity between a power line to which power of the single-phase power supply 10 is supplied and the ground line G is a capacity of only capacitor corresponding to the first power line A1.

By contrast, when the reverse connection state, power is supplied to three power lines which are the fourth power line A2, the fifth power line B2 and the sixth power line C2, and capacitors are provided respectively on each of three power lines. Therefore, a total capacity of capacitors between each of three power lines and the ground line G is sum of capacities of three capacitors. That is, a capacitor when the single-phase power supply 20 connected in the reverse connection state has three times capacity as large as a capacitor when the single-phase power supply 20 in the normal connection state.

Thus, when the single-phase power supply 20 is connected in the reverse connection state, a leakage current (for example, a contact current) generating via capacitors may be significantly increasing in comparison with when the single-phase power supply 20 is connected in the normal connection state.

In the present embodiment, since the first switch 105 and second switch 106 are set to not-conducting when the single-phase power supply 20 is connected, power of the single-phase power supply 20 is not supplied to the fifth power line B2 and the sixth power line C2. That is, since power is supplied to only the first power line A1 and the fourth power line A2 when the single-phase power supply 20 is connected, a total of capacity between a power line of a power supply target and the ground line G is capacity of only capacitor corresponding to the first power line A1 or the fourth power line A2.

As a result, it is possible to prevent a generation of an excessive leakage current when the single-phase power supply 20 is connected in the reverse connection state. That is, in the present embodiment, the leakage current due to connection of the single-phase power supply 20 can be reduced.

In addition, when a power supply connected to the power supply apparatus 100 is the three-phase power supply 10, as illustrated in FIG. 1, each the power supply 10A, 10B, 10C is connected to any of the first terminal 101A, the second terminal 101B and the third terminal 101C. In this case, on the basis of voltage values of the first power line A1, the second power line B1 and the third power line C1 which are detected by the power supply detection section 107, the control section 108 determines that the types of the power supplies connected to the first terminal 101A, the second terminal 101B, the third terminal 101C and the fourth terminal 102 is the three-phase power supply 10.

The control section 108 sets the first switch 105 and the second switch 106 to conducting when the types of the power supplies is determined that it is the three-phase power supply 10.

In this way, since the fifth power line B2 and the sixth power line C2 conduct with the ground line G when the types of the power supplies connected to the power supply apparatus 100 is the three-phase power supply 10, it is possible to cause the power supply apparatus 100 to perform a desired operation.

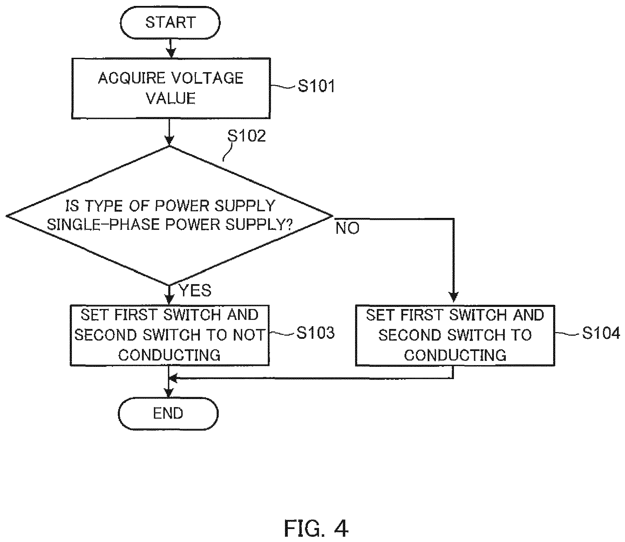

An exemplary operation of a switching control in the power supply apparatus 100 having the above-mentioned configuration is described below. FIG. 4 is a flowchart of an exemplary operation of the switching control in the power supply apparatus 100. The process in FIG. 4 is appropriately executed for example when a predetermined power supply is connected to the power supply apparatus 100. Note that the process in FIG. 4 is started in state that the first switch 105 and the second switch 106 are not-conducting. The predetermined power supply is the three-phase power supply 10 or the single-phase power supply 20.

As illustrated in FIG. 4, the control section 108 acquires a voltage value detected by the power supply detection section 107 (step S101). Next, the control section 108 determines whether a types of power supplies is the single-phase power supply 20 (step S102).

When the types of power supplies is the single-phase power supply 20 as a result of the determination (step S102, YES), the control section 108 sets the first switch 105 and the second switch 106 to not-conducting (step S 103). That is, the control section 108 leaves the first switch 105 and the second switch 106 not-conducting.

On the other hand, when the types of power supplies is not the single-phase power supply 20 (step S102, NO), that is, when the types of power supplies is the three-phase power supply 10, the control section 108 sets the first switch 105 and the second switch 106 conducting (step S104).

After step S103 or step S104, this control is terminated.

In the present embodiment having the above-mentioned configuration, since the first switch 105 and the second switch 106 are set to not-conducting when the types of power supplies is the single-phase power supply 10, power is not supplied via the fifth power line B2 and the sixth power line C2. As a result, a generation of an excessive leakage current when the single-phase power supply 20 is connected can be prevented. That is, in the present embodiment, the leakage current due to connection of the single-phase power supply 20 can be reduced.

In addition, since the first switch 105 and the second switch 106 are provided on the fifth power line B2 and the sixth power line C2, the switch is provided at only position required to reduce the leakage current. Thus, the configuration of the power supply apparatus 100 can be simplified.

In addition, the first switch 105 and the second switch 106 are set to not-conducting when the types of power supplies is the single-phase power supply 20, and the first switch 105 and the second switch 106 are set to conducting when the types of power supplies is the three-phase power supply 10. That is, since control of the first switch 105 and the second switch 106 is performed on the basis of the types of power supplies, a switching control of the power supply apparatus 100 can be simplified.

In addition, since the first switch 105 and the second switch 106 are provided in the stage preceding capacitor, the first switch 105 and the second switch 106 are disposed on positions closer to power supply than capacitor. Thus, it is possible to prevent power from being supplied to capacitor included in a generation path of the leakage current.

Incidentally, it is conceivable to reduce the number of capacitors in power lines for reducing a contact current. When the number of capacitors in power lines is reduced, the noise performance of the power supply apparatus 100 deteriorates and thus, parts for a noise suppression is required separately, and in turn, it may lead to increase cost and to increase in size.

In the present embodiment, by providing simple the power detection section 107, the contact current can be reduced and thus the number of capacitors requires not to be reduced. As a result, increasing in cost and increasing in size of the power supply apparatus 100 can be suppressed.

Note that while the first switch 105 and the second switch 106 are set to not-conducting at the initial state in the above-described first embodiment, the present disclosure is not limited to this, and the first switch 105 and the second switch 106 may be set to conducting.

In this case, when the power supply detection section 107 detects that a current value of the first power line A1 or the power line D is reached at a predetermined value, the control section 108 determines that the types of power supplies is the single-phase power supply 20. When the power supply detection section 107 detects a voltage value, the current value corresponds to the voltage value. The predetermined value is set to, for example, a current value at a level that does not any problems at practical use as a leakage current.

Then, when determining that the types of power supplies is the single-phase power supply 20, the control section 108 sets the first switch 105 and the second switch 106 to not-conducting.

Even with this, the leakage current due to connection of the single-phase power supply 20 can be reduced.

Further, in this configuration, while the first switch 105 and the second switch 106 are set to not-conducting when the power supply detection section 107 detects that the current value is reached at the predetermined value, the present disclosure is not limited to this. For example, when current value (current value corresponding voltage value) of the first power line A1 or the power line D is detected by the power detection section 107, the control section 108 may determine that the types of power supplies is the single-phase power supply 20, and set the first switch 105 and the second switch 106 to not-conducting.

However, since the first switch 105 and the second switch 106 are set to not-conducting at the initial state, the leakage current generates via the fourth power line A2, the fifth power line B2 and the sixth power line C2 when the single-phase power supply 20 is connected to the power supply apparatus 100 in the reverse connection state. Therefore, in view of reducing the leakage current, it is preferable that the first switch 105 and the second switch 106 are set to not-conducting until current value detected by the power supply detection section 107 reaches the predetermined value.

In addition, while the AC filters 103A, 103B, 103C are exemplified as a first load section, a second load section and a third load section in the above-described first embodiment, the present disclosure is not limited to this. For example, the first load section, the second load section and the third load section may be the power factor correction circuits 104A, 104B, 104C. Further, the first load section, the second load section and the third load section may be power converters (for example, DC-DC converter) provided in a battery side with respect to power factor correction circuits.

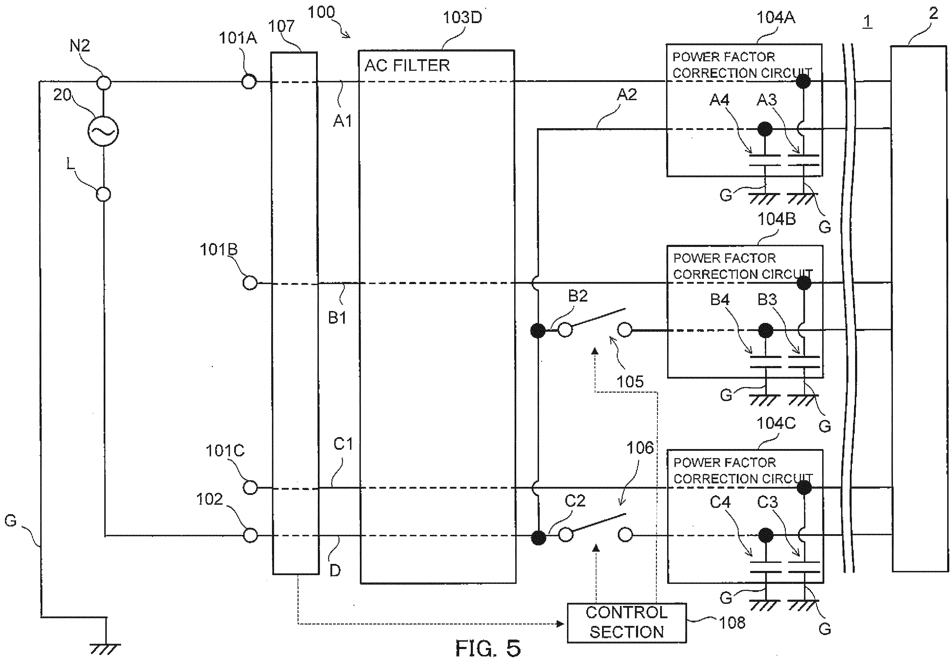

This configuration may be applied to the configuration including three AC filters illustrated in FIG. 1 and the like, and, for example, as illustrated in FIG. 5, be applied to the configuration including only one AC filter 103D.

The AC filter 103D is provided on a power line connected to the first terminal 101A, the second terminal 101B, the third terminal 101C and the fourth terminal 102. The power line D connected to the fourth terminal 102 passes through the AC filter 103D and then branches into the fourth power line A2, the fifth power line B2 and the sixth power line C2. The first switch 105 and the second switch 106 are respectively provided on each of the fifth power line B2 and the sixth power line C2.

In this configuration, when a switch is provided in a stage preceding capacitor corresponding to the AC filter 103D in the power line D, all of the fourth power line A2, the fifth power line B2 and the sixth power line C2 are not-conducting and thus an operation of all load sections may be affected.

Therefore, in configuration including the AC filter 103D, the first switch 105 and the second switch 106 are provided in a stage preceding capacitor corresponding to power factor correction circuits and thus it is possible to suppress being affected the operation of all load sections.

In addition, while the power supply detection section 107 is provided inside the power supply apparatus 100 in the above-described first embodiment, the present disclosure is not limited to this, and may be provided outside the power supply apparatus 100.

Examples of configuration in which the power supply detection section 107 is provided outside the power supply apparatus include an apparatus detecting voltage value and the like of each terminal as described above, and an apparatus connected to the power supply apparatus 100 and having a communication function.

Such an apparatus includes a transmission section that transmits power supply information indicating information of the types of power supplies. The control section 108 acquires the power supply information and sets the first switch 105 and the second switch 106 to not-conducting when power supply connected to the power supply apparatus100 is the single-phase power supply 20. Such a configuration can also reduce the leakage current due to connection of the single-phase power supply 20.

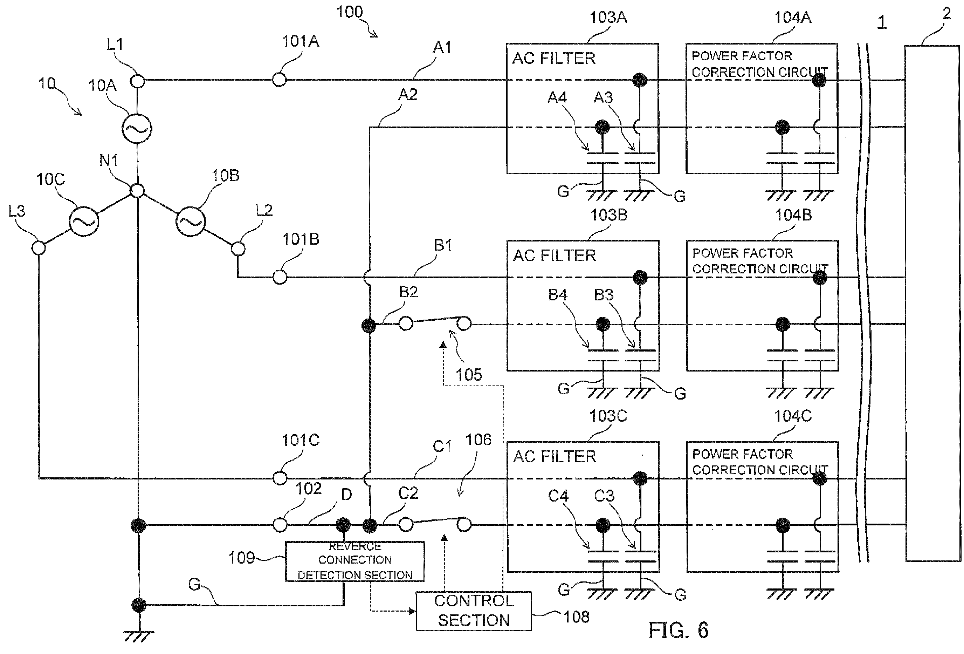

A second embodiment of the present disclosure is described below with reference to the drawings. FIG. 6 a block diagram illustrating a vehicle 1 including a power supply apparatus 100 according to a second embodiment of the present disclosure.

As illustrated in FIG. 6, power supply apparatus 100 is, for example, a charger for charging a battery mounted in a vehicle, and operates by power supplied from an external AC power supply. The power supply apparatus 100 is configured so that a single-phase power supply and a third-phase power supply 10 can be connected as an external power supply.

FIG. 6 illustrates an example of the power supply apparatus 100 that is connected to the third-phase power supply 10 having a first AC power supply 10A, a second power supply 10B and a third power supply 10C connected by Y connection at a neutral point N1 connected to a ground line G. A ground end of the first AC power supply 10A, a ground end of the second power supply 10B and a ground end of the third power supply 10C are connected at the neutral point N1. The ground line G is corresponded to a ground.

The power supply apparatus 100 includes a first terminal 101A, a second terminal 101B, a third terminal 101C, a fourth terminal 102, AC filters 103A, 103B, 103C, power factor correction circuits 104A, 104B, 104C, a first switch 105, a second switch 106, a reverse connection detection section 109, a control section 108 and the like. The first terminal 101A, the second terminal 101B, the third terminal 101C, the fourth terminal 102, the AC filters 103A, 103B, 103C, the power factor correction circuits 104A, 104B, 104C, the first switch 105 and the second switch 106 are the same as the above-described first embodiment. The reverse connection section 109 is connected to a power line D connected to the fourth terminal 102.

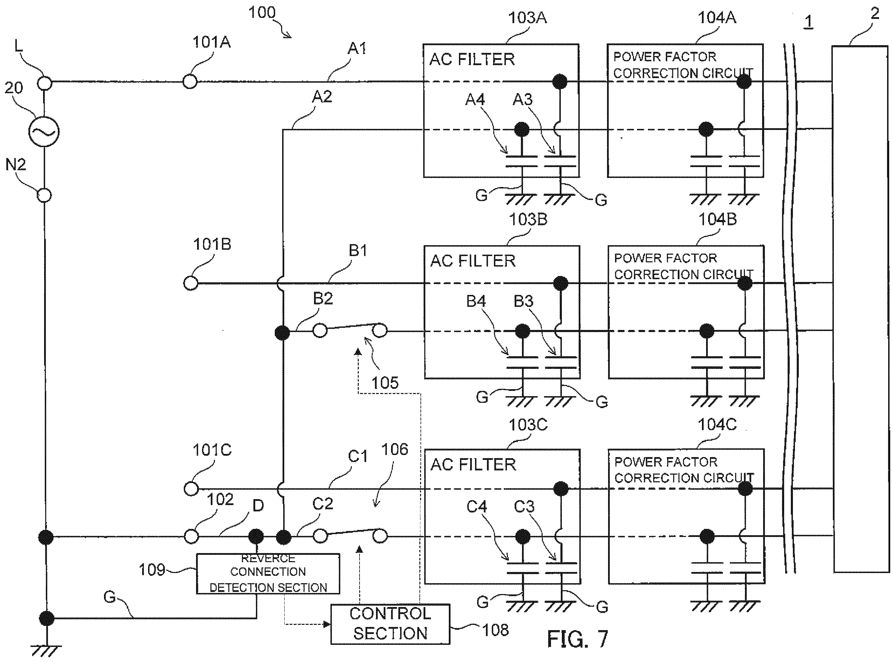

As illustrated in FIG. 7, when the power supply apparatus 100 is connected to the single-phase power supply 20, a non-ground end L and a ground end N2 of the single-phase power supply 20 are any of the first terminal 101A and the fourth terminal 102 as in the first embodiment described above. The ground end N2 is also connected to the ground line G.

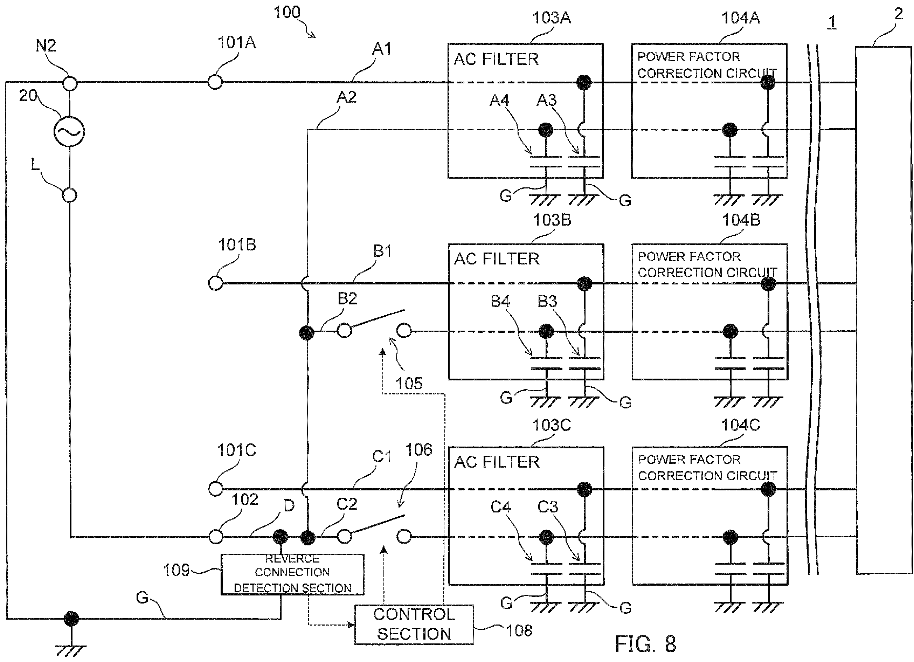

As illustrated in FIG. 8, when a connection state is a reverse connection state in which the ground end N2 of the single-phase power supply 20 is connected to the first terminal 101A and the non-ground end L of the single-phase power supply 20 is connected to the fourth terminal 102, power of the single-phase power supply 20 is supplied to the power supply apparatus 100 via the fourth power line A2.

The reverse connection detection section 109 detects that the connection state between both the first terminal 101A and the fourth terminal 102 and the single-phase power supply 20 is the reverse connection state. The reverse connection detection section 109 is, for example, a known voltage detection circuit including a resistor element connecting between the fourth terminal 102 (the power line D) and the ground line G and the like, and the reverse connection detection section 109 detects a voltage value of an end of the fourth terminal 102 side in the resistor element.

Note that reverse connection detection section 109 may be a current detection circuit detecting a current value of the ground line G. When the reverse connection detection section 109 is the current detection circuit, the reverse connection detection section 109 is disposed on the ground line G or a power line relaying the ground line G and each capacitor.

The control section 108 includes a CPU, a ROM, a RAM and an input output circuit, which are not illustrated in the drawing. The control section 108 is configured to control states of the first switch 105 and the second switch 106 by using detection result of the reverse connection detection section 109 on the basis of a program set in advance.

The control section 108 controls to switch the first switch 105 and the second switch 106 to not-conducting when the connection state between both the first terminal 101A and the fourth terminal 102 and the single-phase power supply 20 is the reverse connection state.

Specifically, the control section 108 sets the first switch 105 and the second switch 106 to not-conducting at an initial state. When a power supply is connected to the power supply apparatus 100, the control section 108 acquires a voltage value detected by the reverse connection detection section 109 and determines whether a connection state between both the first terminal 101A and the fourth terminal 102 and power supply is the reverse connection state.

When the power supply connected to the power supply apparatus 100 is the single-phase power supply 20 and the connection state is the reverse connection state, as illustrated in FIG. 8, the fourth terminal 102 is connected to the non-ground end L in the single-phase power supply 20. In this case, the reverse connection detection section 109 detects a voltage value corresponding to power supplied by the single-phase power supply 20. On the basis of the voltage value, the control section 108 determines that the connection state between both the first terminal 101A and the fourth terminal 102 and the ground line G is the reverse connection state.

The control section 108 sets the first switch 105 and the second switch 106 to not-conducting when the connection state is determined that it is the reverse connection state. Since the first switch 105 and the second switch 106 is set to not-conducting at the initial state, in this case, states of the first switch 105 and the second switch 106 are maintained in not-conducting.

When the connection state between both the first terminal 101A and the fourth terminal 102 and the ground line G is the reverse connection state, power is supplied to the power supply apparatus 100 via the fourth terminal 102. Therefore, when states of the first switch 105 and the second switch 106 are conducting, power is supplied to not only the fourth power line A2 but also the fifth power line B2 and the sixth power line C2.

In this case, since capacitors are connected respectively between each of the fourth power line A2, the fifth power line B2 and the sixth power line C2 and the ground line G, a total capacity of capacitors corresponding to each power line to which power is supplied, is increasing in comparison with the normal connection state.

Specifically, since power is not supplied to the second power line B1 and the third power line C1 when the single-phase power supply 20 is connected in the normal connection state (see FIG. 7), a capacity between a power line to which power of the single-phase power supply 10 is supplied and the ground line G is a capacity of only capacitor corresponding to the first power line A1.

By contrast, when the reverse connection state, power is supplied to three power lines which are the fourth power line A2, the fifth power line B2 and the sixth power line C2, and capacitors are provided respectively on each of three power lines. Therefore, a total capacity of capacitors between each of three power lines and the ground line G is sum of capacities of three capacitors. That is, capacitor when the single-phase power supply 20 connected in the reverse connection state has three times capacity as large as capacitor when the single-phase power supply 20 in the normal connection state.

Thus, when the single-phase power supply 20 is connected in the reverse connection state, a leakage current (for example, a contact current) generating via capacitors may be significantly increasing in comparison with when the single-phase power supply 20 is connected in the normal connection state.

In the present embodiment, since the first switch 105 and second switch 106 are set to not-conducting when the connection state is the reverse connection state, power of the single-phase power supply 20 is not supplied to the fifth power line B2 and the sixth power line C2. That is, since power is supplied to only the first power line A1 and the fourth power line A2 when the connection state is the reverse connection state, a total of capacity between a power line of power supply target and the ground line G is capacity of only capacitor corresponding to the first power line A1 or the fourth power line A2. That is, the present embodiment can reduce the leakage current when the connection state is the reverse connection state.

In addition, when the power supply connected to the power supply apparatus 100 is the single-phase power supply 20 and the connection state is the normal connection state, as illustrated in FIG. 7, the fourth terminal 102 conducts with the ground line G. In this case, on the basis of a voltage value of the ground line G detected by the reverse connection detection section 109, the control section 108 determines that the connection state between both the first terminal 101A and the fourth terminal 102 and the ground line G is not the reverse connection state.

Further, when the power supply connected to the power supply apparatus 100 is the three-phase power supply 10, as illustrated in FIG. 6, the fourth terminal 102 conducts with the ground line G. In this case, on the basis of a voltage value of the ground line G detected by the reverse connection detection section 109, the control section 108 determines that the connection state between both the first terminal 101A and the fourth terminal 102 and the ground line G is not the reverse connection state.

The control section 108 sets the first switch 105 and the second switch 106 to conducting when the connection state is determined that it is not the reverse connection state.

In this way, since the fifth power line B2 and the sixth power line C2 conduct with the ground line G when the types of power supplies connected to the power supply apparatus 100 is the three-phase power supply 10, it is possible to cause the power supply apparatus 100 to perform a desired operation.

Further, when the types of power supplies connected to the power supply apparatus 100 is the single-phase power supply 20, it is possible to cause the power supply apparatus 100 to perform a desired operation.

Note that the power supply apparatus 100 needs to be configured so that power of the single-phase power supply 20, that is, power supplied to the first power line A1 can be supplied to the second power line B1 and the third power line C1 for using a second load section and a third load section when the single-phase power supply 20 is connected.

Such a configuration includes, for example, a configuration having a switch that can switch a power line connecting the first power line A1 and the second power line B1 or the third power line C1 between conducting and not-conducting This switch is controlled to set to conducting only when power of the single-phase power supply 20 is supplied to the second load section and the third load section.

In addition, when the first terminal 101A and the fourth terminal 102 are connected to the single-phase power supply 20 in the normal connection state, the control section 108 may leave the first switch 105 and the second switch 106 not-conducting. This reason for this is that it is not necessary to set the first switch 105 and the second switch 106 to conducting when it is not necessary to supply power to the second load section and the third load section.

In addition, when the first terminal 101A and the fourth terminal 102 are connected to the single-phase power supply 20 in the reverse connection state, the control section 108 may perform control to notify a user that the connection state is the reverse connection state.

Examples of control to notify the user that the connection state is the reverse connection state include control to output a notification command indicating that power supply apparatus 100 is connected in the reverse connection state, to a notification section (for example, a mobile terminal, an infotainment device and the like) provided outside the power supply apparatus 100.

In this way, the user can easily recognize that the single-phase power supply 20 is connected in the reverse connection state.

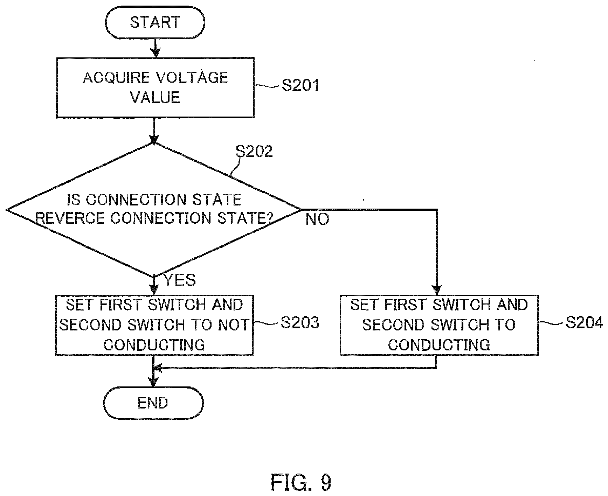

An exemplary operation of a switching control in the power supply apparatus 100 having the above-mentioned configuration is described below. FIG. 9 is a flowchart of an exemplary operation of the switching control in the power supply apparatus 100. The process in FIG. 9 is appropriately executed for example when a predetermined power supply is connected to the power supply apparatus 100. Note that the process in FIG. 9 is started in state that the first switch 105 and the second switch 106 are not-conducting. The predetermined power supply is the three-phase power supply 10 or the single-phase power supply 20.

As illustrated in FIG. 9, the control section 108 acquires a voltage value detected by the reverse connection detection section 109 (step S201). Next, the control section 108 determines whether a connection state of the single-phase power supply 20 is a reverse connection state (step S202).

When the connection state is the reverse connection state as a result of the determination (step S202, YES), the control section 108 sets the first switch 105 and the second switch 106 to not-conducting (step S203). That is, the control section 108 leaves the first switch 105 and the second switch 106 not-conducting.

On the other hand, when the connection state is not the reverse connection state (step S202, NO), the control section 108 sets the first switch 105 and the second switch 106 conducting (step S204). Note that when power supply connected to the power supply apparatus 100 is the three-phase power supply 10, the process of step S204 may be performed after step S202.

After step S203 or step S204, this control is terminated.

In the present embodiment having the above-mentioned configuration, since the first switch 105 and the second switch 106 are set to not-conducting when the connection state of the single-phase power supply 20 is the reverse connection state, power is not supplied via the fifth power line B2 and the sixth power line C2. As a result, a generation of an excessive leakage current when the single-phase power supply 20 is connected in the reverse connection state can be prevented.

In addition, since the first switch 105 and the second switch 106 are provided on the fifth power line B2 and the sixth power line C2, the switch is provided at only position required to reduce the leakage current. Thus, the configuration of the power supply apparatus 100 can be simplified.

In addition, the first switch 105 and the second switch 106 are set to not-conducting when the single-phase power supply 20 is connected in the reverse connection state, and the first switch 105 and the second switch 106 are set to conducting when the single-phase power supply 20 is not connected in the reverse connection state. That is, since control of the first switch 105 and the second switch 106 is performed on the basis of whether or not the single-phase power supply 20 is connected in the reverse connection state, a switching control of the power supply apparatus 100 can be simplified.

In addition, since the first switch 105 and the second switch 106 are provided in the stage preceding capacitor, the first switch 105 and the second switch 106 are disposed on positions closer to power supply than capacitor. Thus, it is possible to prevent power from being supplied to capacitor included in a generation path of the leakage current.

Incidentally, it is conceivable to reduce the number of capacitors in power lines for reducing a contact current. When the number of capacitors in power lines is reduced, the noise performance of the power supply apparatus 100 deteriorates and thus, parts for a noise suppression is required separately, and in turn, it may lead to increase cost and to increase in size.

In the present embodiment, by providing simple the reverse connection detection section 109, the contact current can be reduced and thus the number of capacitors requires not to be reduced. As a result, increasing in cost and increasing in size of the power supply apparatus 100 can be suppressed.

Note that while the first switch 105 and the second switch 106 are set to not-conducting at the initial state in the above-described second embodiment, the present disclosure is not limited to this, and the first switch 105 and the second switch 106 may be set to conducting.

In this case, when the reverse connection detection section 109 detects that a current value of the first power line A1 or the power line D is reached at a predetermined value, the control section 108 determines that the connection state of the single-phase power supply 20 is the reverse connection state. When the reverse connection detection section 109 detects a voltage value, the current value corresponds to the voltage value. The predetermined value is set to, for example, a current value at a level that does not any problems at practical use as a leakage current.

Then, when determining that the connection state of the single-phase power supply 20 is the reverse connection state, the control section 108 sets the first switch 105 and the second switch 106 to not-conducting.

Even with this, the leakage current due to the reverse connection state of the single-phase power supply 20 can be reduced.

Further, in this configuration, while the first switch 105 and the second switch 106 are set to not-conducting when the reverse connection detection section 109 detects that the current value is reached at the predetermined value, the present disclosure is not limited to this. For example, when a current value (the current value corresponding a voltage value) of the first power line A1 or the power line D is detected by the reverse connection detection section 109, the control section 108 may determine that the connection state of the single-phase power supply 20 is the reverse connection state, and set the first switch 105 and the second switch 106 to not-conducting.

However, since the first switch 105 and the second switch 106 are set to not-conducting at the initial state, the leakage current generates via the fourth power line A2, the fifth power line B2 and the sixth power line C2 when the single-phase power supply 20 is connected to the power supply apparatus 100 in the reverse connection state. Therefore, in view of reducing the leakage current, it is preferable that the first switch 105 and the second switch 106 are set to not-conducting until the current value detected by the reverse connection detection section 109 reaches the predetermined value.

In addition, while the AC filters 103A, 103B, 103C are exemplified as a first load section, a second load section and a third load section in the above-described second embodiment, the present disclosure is not limited to this. For example, the first load section, the second load section and the third load section may be the power factor correction circuits 104A, 104B, 104C. Further, the first load section, the second load section and the third load section may be power converters (for example, DC-DC converter) provided in a battery side with respect to power factor correction circuits.

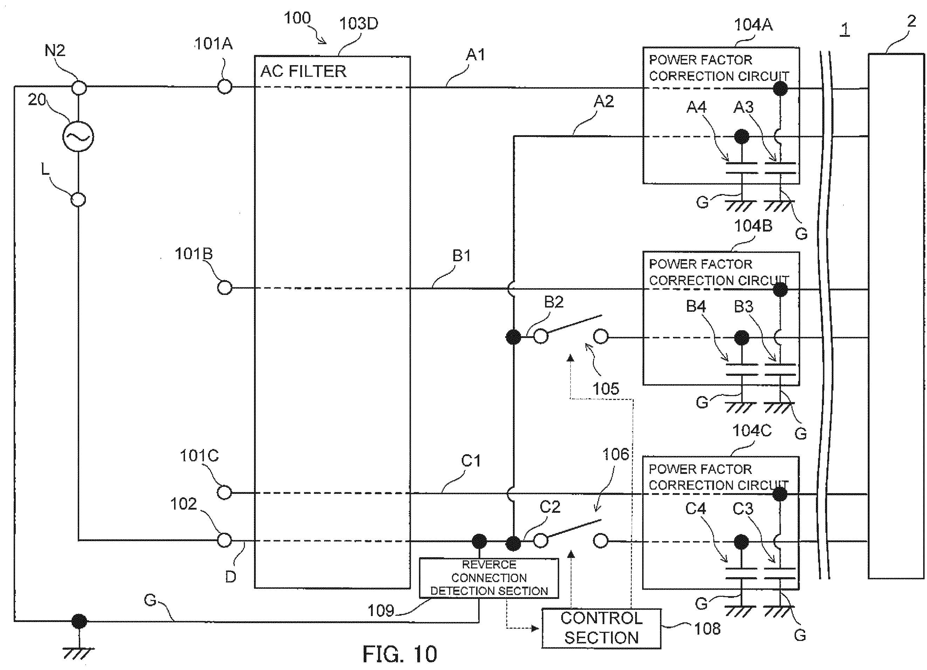

This configuration may be applied to the configuration including three AC filters illustrated in FIG. 6 and the like, and, for example, as illustrated in FIG. 10, be applied to the configuration including only one AC filter 103D.

TheAC filter 103D is provided on a power line connected to the first terminal 101A, the second terminal 101B, the third terminal 101C and the fourth terminal 102. The power line D connected to the fourth terminal 102 passes through the AC filter 103D and then branches into the fourth power line A2, the fifth power line B2 and the sixth power line C2. The first switch 105 and the second switch 106 are respectively provided on each of the fifth power line B2 and the sixth power line C2.

In this configuration, when a switch is provided in a stage preceding capacitor corresponding to the AC filter 103D in the power line D, all of the fourth power line A2, the fifth power line B2 and the sixth power line C2 are not-conducting and thus an operation of all load sections may be affected.

Therefore, in configuration including the AC filter 103D, the first switch 105 and the second switch 106 are provided in a stage preceding capacitor corresponding to power factor correction circuits and thus it is possible to suppress being affected the operation of all load sections.

In addition, while the reverse connection detection section 109 is provided inside the power supply apparatus 100 in the above-described second embodiment, the present disclosure is not limited to this, and may be provided outside the power supply apparatus 100.

In addition, while a switch may be provided on any of the fourth power line A2, the fifth power line B2 and the sixth power line C2 in the above-described second embodiment, the present disclosure is not limited to this, and the switch may be disposed on an external power supply side with respect to a confluent point to which the fourth power line A2, the fifth power line B2 and the sixth power line C2 are electrically connected.

In addition, while the first switch 105 and the second switch 106 is provided in an input stage of a load section in power line in the above-described each embodiment, the present disclosure is not limited to this, and may be provided inside the load section.

In addition, while a switch is provided on the fifth power line B2 and the sixth power line C2 in the above-described each embodiment, the present disclosure is not limited to this, and may be provided on all of the fourth power line A2, the fifth power line B2 and the sixth power line C2. However, in view of causing the power supply apparatus 100 connected to the single-phase power supply 20 to operate, it is preferable to set a switch of the fourth power line A2 to conducting during operation of the power supply apparatus 100.

Further, a switch may be provided on any of the fourth power line A2, the fifth power line B2 and the sixth power line C2. However, in view of causing the power supply apparatus 100 connected to the single-phase power supply 20 to operate, it is preferable that the switch is provided on any of the fifth power line B2 and the sixth power line C2. In addition, in view of reducing leakage current, it is preferable that the switch is provided on both the fifth power line B2 and the sixth power line C2.

In addition, while the control section 108 is provided inside the power supply apparatus 100 in the above-described each embodiment, the present disclosure is not limited to this, may be provided outside the power supply apparatus 100.

In addition, while a plurality of capacitors is provide in an output stage of the load section in the above-described each embodiment, the present disclosure is not limited to this, may be provided in other part.

In addition, while a configuration connected by Y connection is exemplified as the three-phase power supply in the above-described each embodiment, the present disclosure is not limited to this, and the three-phase power supply may be a configuration connected by delta connection.

In addition, while a charger to charge the battery 2 mounted on the vehicle is exemplified as a power supply apparatus in the above-described each embodiment, the present disclosure is not limited to this, and the power supply apparatus 100 may be an apparatus other than the charger.

In addition, while the power supply apparatus 100 is mounted on the vehicle 1 in the above-described each embodiment, the present disclosure is not limited to this, may be mounted on an apparatus other than the vehicle 1.

In addition, while the power supply apparatus 100 includes the first terminal 101A, the second terminal 101B, the third terminal 101C and the fourth terminal 102 in the above-described each embodiment, the present disclosure is not limited to this, the first terminal 101A, the second terminal 101B, the third terminal 101C and the fourth terminal 102 may be disposed outside the power supply apparatus.

In addition, while power supply apparatus 100 includes the AC filters 103A, 103B, 103C in the above-described the each embodiment, the present disclosure is not limited to this, the power supply apparatus may include at least the AC filters 103A, 103B (corresponding to a "first load section" and a "second load section" of the present disclosure). Also in this case, the first load section and the second load section may be the power factor correction circuits 104A, 104B and may be power converters (for example, DC-DC converter) provided in a battery side with respect to the power factor correction circuits.

That is, the power supply apparatus of the present disclosure can connect to an external power supply that is the single-phase power supply or the three-phase power supply and includes the AC filter 103A (corresponding to the first load section) and the AC filter 103B (corresponding to the second load section). The AC filter 103A may be electrically connected to the external power supply (in the case of the first embodiment, a ground end of external power supply) by a neutral line (corresponding to a first neutral line), and AC filter 103B may be electrically connected to a confluent point (a point to which the fourth power line A2 and the fifth power line B2 are electrically connected) on the first neutral line by a neutral line (corresponding to a second neutral line). In this case, the first capacitor A3 is provided between the first neutral line and the ground line G, and the second capacitor A4 is provided between the second neutral line and the ground line G. Also in this case, the power supply apparatus may include a switch section provided on the neutral lines. In addition, in the case of the first embodiment, the switch section is disposed on the AC filter 103A side with respect to above-described confluent point.

Here, the neutral line is a connecting line for connecting an AC filter and a non-ground end of the external power supply (in the case of the second embodiment, a connecting line for connecting an AC filter and a non-ground end of the external power supply in the normal connection state). The neutral line of the present disclosure needs not to include all of connecting lines that connects the AC filter of the power supply apparatus and the non-ground line of the external power supply, and may include at least a part of the connecting lines. In the power supply apparatus of the present disclosure, the first neutral line is a neutral line for electrically connecting the first load section and the external power supply, and the second neutral line is a neutral line for electrically connecting the second load section and the external power supply. More specifically, the second neutral line is a line connecting the above-described confluent point on the first neutral line and the second load section.

In addition, in the case of the first embodiment, the switch may be controlled to set to not-conducting when the first neutral line is electrically connected to the ground end of the single-phase power supply (in the case of the second embodiment, non-ground end of an external power supply), and may be controlled to set to conducting when the first neutral line is electrically connected to the ground end of the three-phase power line (in the case of the second embodiment, ground end of the external power supply)

The above-mentioned embodiments are merely examples of embodiments in implementing the present disclosure, and the technical scope of the present disclosure should not be construed as limited by them. In other words, the present disclosure can be implemented in various forms without deviating from its gist or its main features.

This application is entitled to and claims the benefit of Japanese Patent Application No. 2019-059137 and No. 2019-059143 filed on March 26, 2019, the disclosure each of which including the specification, drawings and abstract is incorporated herein by reference in its entirety.

### Industrial Applicability

The power supply apparatus of the present disclosure is useful as a power supply apparatus, a vehicle and a switching control device that can reduce the leakage current due to connection of single-phase power supply.

### Reference Signs List

- 1: Vehicle
- 2: Battery
- 10: Three-phase power supply
- 10A: First AC power supply
- 10B: Second AC power supply
- 10C: Third AC power supply
- 20: Single-phase power supply
- 100: Power supply apparatus
- 101A: First terminal
- 101B: Second terminal
- 101C: Third terminal
- 102: Fourth terminal
- 103A: AC filter
- 103B: AC filter
- 103C: AC filter
- 104A: Power factor correction circuit
- 104B: Power factor correction circuit
- 104C: Power factor correction circuit
- 105: First switch
- 106: Second switch
- 107: Power supply detection section
- 108: Control section
- 109: Reverse connection detection section
- A1: First power line
- A2: Fourth power line
- A3: First capacitor
- A4: Second capacitor
- B1: Second power line
- B2: Fifth power line
- B3: Third capacitor
- B4: Fourth capacitor
- C1: Third power line
- C2: Sixth power line
- C3: Fifth capacitor
- C4: Sixth capacitor
- D: Power line
- G: Ground line

## Claims

1. A power supply apparatus allowed to be connected to a single-phase power supply and a three-phase power supply, the power supply apparatus comprising:
a first terminal that is connected to a first power line and is allowed to be connected to any of a non-ground end of the single-phase power supply, a ground end of the single-phase power supply, and a first non-ground end of the three-phase power supply;
a second terminal that is connected to a second power line and is allowed to be connected to a second non-ground end of the three-phase power supply;
a third terminal that is connected to a third power line and is allowed to be connected to a third non-ground end of the three-phase power supply;
a fourth terminal that is connected to a fourth power line, a fifth power line and a sixth power line and is allowed to be connected to any of the non-ground end of the single-phase power supply, the ground end of the single-phase power supply and a ground end of the three-phase power supply;
a first load section provided on the first power line and the fourth power line;
a second load section provided on the second power line and the fifth power line;
a third load section provided on the third power line and the sixth power line;
a plurality of capacitors provided between each of the first power line, the second power line, the third power line, the fourth power line, the fifth power line and the sixth power line, and a ground; and
a switch section switching at least one power line of the fourth power line, the fifth power line and the sixth power line between conducting and not-conducting, wherein
the switch section switches the at least one power line to not-conducting when the single-phase power supply is connected to the first terminal and the fourth terminal.

2. The power supply apparatus according to claim 1, wherein the switch section is provided on at least one of the fifth power line and the sixth power line.

3. The power supply apparatus according to claim 1, wherein the power supply apparatus further includes a power supply detector detecting a type of a power supply connected to the first terminal, the second terminal, the third terminal and the fourth terminal.

4. The power supply apparatus according to claim 1, wherein the power supply apparatus further includes a controller that controls the switch section to switch the at least one power line to not-conducting when a type of a power supply is the single-phase power supply, and to switch the at least one power line to conducting when the type of a power line is the three-phase power supply.

5. The power supply apparatus according to claim 1, wherein the switch section is provided in a stage preceding a capacitor corresponding to the at least one power line.

6. The power supply apparatus according to claim 1, wherein the first load section, the second load section and the third load section are circuits for converting power supplied from the single-phase power supply or the three-phase power supply into power for charging a battery.

7. The power supply apparatus according to claim 1, wherein the switch section sets the at least one power line to not-conducting when the ground end of the single-phase power supply is connected to the fourth terminal and the non-ground end of the single-phase power supply is connected to the first terminal.

8. The power supply apparatus according to claim 7, wherein the power supply apparatus further includes a reverse connection detector detecting that a connection state between the first terminal and the fourth terminal and the single-phase power supply is a reverse connection state.

9. The power supply apparatus according to claim 7, wherein the power supply apparatus further includes a controller that controls the switch section to set the at least one power line to not-conducting when a connection state between the first terminal and the fourth terminal and the single-phase power supply is a reverse connection state, and to set the at least one power line to conducting when the connection state between the first terminal and the fourth terminal and the single-phase power supply is not the reverse connection state.

10. A vehicle, comprising:
a battery; and
the power supply apparatus according to claim 1.

11. A switching control device of a power supply apparatus allowing to be connected to a single-phase power supply and a three-phase power supply, wherein the switching control device includes a switch section switching at least one ground power line of each ground power line in each of three load sections between conducting and not-conducting, the switching control device comprising:
an acquiring section that acquires power supply information representing information of a power supply connected to the power supply apparatus; and
a switching section that switches the switch section to set the at least one ground power line to not-conducting when the power supply connected to the power supply apparatus is the single-phase power supply.

12. A power supply apparatus allowed to be connected to an external power supply that is a single-phase power supply or a three-phase power supply, wherein the power supply apparatus includes a first load section and a second load section,
wherein the first load section is electrically connected to a ground end of the external power line by a first neutral line;
wherein the second load section is electrically connected to a confluent point on the first neutral line by a second neutral line;
wherein the power supply apparatus includes a first capacitor provided between the first neutral line and a ground, a second capacitor provided between the second neutral line and the ground and a switch section disposed on the first neutral line; and
wherein the switch section is disposed at a side of the first load section with respect to the confluent point.

13. The power supply apparatus according to claim 12, wherein the switch section is cut off when the first neutral line is electrically connected to the ground end of the single-phase power supply.

14. The power supply apparatus according to claim 12, wherein the switch section is conducted when the first neutral line is electrically connected to the ground end of the three-phase power supply.

15. The power supply apparatus according to claim 12, wherein the power supply apparatus further includes a third load section; and
wherein the third load section is electrically connected to the confluent point by a third neutral line.

16. The power supply apparatus according to claim 12, wherein the first load section and the second load section are an AC filter, a power factor correction circuit or a DC-DC convertor.
